# EUROPÄISCHE PATENTANMELDUNG

(11) **EP 2 230 409 A1**
(43) Veröffentlichungstag der Anmeldung: **22.09.2010**
(21) Anmeldenummer: 10401027.7
(22) Anmeldetag: 08.03.2010
(51) Int. Cl.: F16B 13/14

(54) **Ankerhülse**

(30) Priorität: 18.03.2009 DE 102009013847
(71) Anmelder: fischerwerke GmbH & Co. KG, 72178 Waldachtal (DE)
(72) Erfinder: Grün, Jürgen, 79268 Bötzingen (DE); Jakob, Rainer, 79111 Freiburg (DE); Becker, Dirk, 72160 Horb (DE); Schwaab, Frank, 79350 Sexau (DE)

(57) **Zusammenfassung**

Die Erfindung betrifft eine Ankerhülse (1) zum Verankern eines Befestigungselements (19) in einem Verankerungsgrund (21) mit Hohlräumen (31, 32) mittels einer aushärtbaren Masse (22), wobei die Ankerhülse (1) zur Aufnahme des Befestigungselements (19) dient. Die Ankerhülse (1) weist einen Bund (2) und einen Hülsenkörper (3) auf, die miteinander verbunden sind. Die Ankerhülse (1) umfasst einen ersten Abschnitt (4) mit mindestens einer ersten Austrittsöffnung (5) für die aushärtbare Masse (22), an der ein ein Leitelement (6) für die aushärtbare Masse (22) angeordnet ist, das radial von der Ankerhülse (1) absteht. Um eine Ankerhülse (1) zu schaffen, die gewährleistet, dass das Befestigungselement (19) in dem Verankerungsgrund (21) unabhängig von der Größe der Hohlräume (31, 32) sicher verankerbar ist, schlägt die Erfindung vor, dass die Ankerhülse (1) einen zweiten Abschnitt (7) mit mindestens einer zweiten Austrittsöffnung (9) aufweist, an der kein Leitelement angeordnet ist.

## Beschreibung

Die Erfindung betrifft eine Ankerhülse mit den Merkmalen des Oberbegriffs des Anspruchs 1.

Ankerhülsen zum Verankern eines Befestigungselements in einem Verankerungsgrund mittels einer aushärtbaren Masse sind bekannt. Sie werden insbesondere dann eingesetzt, wenn das Befestigungselement in Hohlbaustoffen, insbesondere in Mauersteinen mit Hohlräumen, beispielsweise in Hochlochziegeln, Kalksandlochsteinen oder Hohlblocksteinen, zu verankern ist, in denen herkömmliche Befestigungsmittel wie Bolzenanker nur unzureichend verankerbar sind und eine aushärtbare Masse ohne Ankerhülse abtropfen und das Befestigungsmittel nicht wirksam verankern würde.

Eine derartige Ankerhülse ist beispielsweise aus der Druckschrift EP 0 572 296 A1 bekannt. Die Ankerhülse weist einen Bund und einen Hülsenkörper auf, die mit einem Federelement miteinander verbunden sind. Die Ankerhülse ist in ein Bohrloch im Verankerungsgrund so weit einsteckbar, bis der Bund an der Außenseite des Untergrunds anliegt. Die Ankerhülse ist als Hohlquerschnitt zur Aufnahme einer als Befestigungselement dienenden Gewindestange ausgeführt, wobei die Gewindestange in ein am Hülsenkörper angeordnetes Innengewinde einschraubbar ist. Am Hülsenkörper sind Leitelemente für die aushärtbare Masse angeordnet, die die aushärtbare Masse in die gewünschte Position leiten und verhindern, dass die Masse vom Befestigungselement abtropft. Die elastisch beweglich angeordneten Leitelemente sind in radialer Richtung und gegen die Einsteckrichtung der Ankerhülse in das Bohrloch geneigt. Sie bilden einen im Wesentlichen geschlossenen Trichter, der über eine am Schaft angeordnete Austrittsöffnung mit der aushärtbaren Masse ausfüllbar ist.

Wird die Ankerhülse in ein Bohrloch eingesteckt, das sich in einem Mauerstein mit Hohlraum befindet, so öffnet sich der Trichter, sobald die in ihre ursprüngliche Position rückfedernden Leitelemente die in Einsteckrichtung vordere Wand des Mauersteins überwunden haben. Sobald der Bund am Mauerstein anliegt, wird das Federelement gestreckt, und der Bund und die Leitelemente werden über das Federelement miteinander verspannt, so dass die Leitelemente sich an der Innenseite der in Einsteckrichtung der Ankerhülse vorderen Wand des Mauersteins abstützen. Die Ankerhülse liegt dadurch schon vor dem Einbringen der aushärtbaren Masse stabil an der vorderen Wand des Mauersteins an. Durch das Ausfüllen des Trichters mit der aushärtbaren Masse bildet sich ein Massepfropfen, der das Befestigungselement und die Ankerhülse fest durch Formschluss im Mauerstein verankert, wie es in Figur 4 der genannten Druckschrift dargestellt ist.

Da die Leitelemente einen relativ großen und im Wesentlichen geschlossenen Trichter bilden, besteht allerdings die Möglichkeit, dass sich der Trichter dann nicht planmäßig entfalten kann, wenn die Mauersteine Hohlräume mit inliegenden Stegen aufweisen. Eine federnde Rückbewegung der Leitelemente in die Position, in der sie den zur Verankerung notwendigen Trichter bilden, kann durch die Stege behindert sein, wodurch die Funktion der Ankerhülse beeinträchtigt ist. Im Extremfall verschließen die Leitelemente die Austrittsöffnung, so dass die Masse nicht austreten kann und somit keinen Massepfropfen bildet.

Aufgabe der Erfindung ist es daher, eine Ankerhülse zu schaffen, die gewährleistet, dass das Befestigungselement unabhängig von der Größe der Hohlräume des Verankerungsgrunds sicher verankerbar ist.

Diese Aufgabe wird erfindungsgemäß durch eine Ankerhülse mit den Merkmalen des Anspruchs 1 gelöst. Die erfindungsgemäße Ankerhülse zum Verankern eines Befestigungselements in einem Verankerungsgrung, insbesondere einem Mauerstein, mittels einer aushärtbaren Masse weist einen Bund und einen Hülsenkörper auf. Als aushärtbare Massen werden typischerweise ein- oder mehrkomponentige Mörtel bzw. Kleber verwendet, wie beispielsweise die bekannten Vinylesterharz- oder Epoxidharz-Mörtel. Der Bund und der Hülsenkörper der Ankerhülse sind miteinander verbunden, wobei insbesondere eine bewegliche Verbindung vorgesehen ist. Die bewegliche Verbindung ermöglicht es, dass nach einem vollständigen Einführen des Leitelements in den hinter der in Einsteckrichtung vorderen Wand eines Mauersteins befindlichen Hohlraum das Leitelement gegen die Innenseite der vorderen Wand verspannt werden kann, wodurch eine stabile Anlage der Ankerhülse am Mauerstein schon vor dem Einbringen bzw. dem Aushärten der aushärtbaren Masse gewährleistet ist. Die Ankerhülse dient zur Aufnahme des Befestigungselements, das durch die aushärtbare Masse zumindest teilweise umschlossen und mit der Ankerhülse im Verankerungsgrund verankert wird. Als Befestigungselement wird üblicherweise eine Gewindestange oder eine profilierte Ankerstange eingesetzt. Erfindungsgemäß kann jedes beliebige Befestigungselement verwendet werden, sofern es in der Ankerhülse verankerbar ist und ein Lastangriffsmittel, wie beispielsweise ein Gewinde, aufweist.

An der erfindungsgemäßen Ankerhülse ist ein erster Abschnitt, mit mindestens einer ersten Austrittsöffnung und einem Leitelement, angeordnet. Das Leitelement steht radial von der Ankerhülse ab und dient zum Leiten der aus der ersten Austrittsöffnung austretenden Masse. Das Leitelement verhindert zudem ein Abtropfen der aushärtbaren Masse in einen Hohlraum des Verankerungsgrunds. "Radial" bedeutet in diesem Zusammenhang, dass das Leitelement in einem Winkel gegen die Achse der Ankerhülse geneigt ist oder senkrecht hierzu stehen.

Kennzeichnend für die erfindungsgemäße Ankerhülse ist, dass der Schaft einen zweiten Abschnitt mit mindestens einer zweiten Austrittsöffnung aufweist, an der kein Leitelement angeordnet ist. Hierdurch wird erreicht, dass die aushärtbare Masse auch dann zur Verankerung aus der Ankerhülse in den Hohlraum des Mauersteins austreten kann, wenn das Leitelement nach dem Einführen der Ankerhülse in ein Bohrloch die erste Austrittsöffnung verschließt. Da an der zweiten Austrittsöffnung kein Leitelement angeordnet ist, das die Austrittsöffnung verschließen könnte, kann die aus der zweiten Austrittsöffnung austretende Masse unabhängig von der Lage der zweiten Austrittsöffnung ungehindet austreten und an der vorderen Wand oder an einem Steg eines Mauersteins einen Massepropfen bilden und/oder eine Verbindung mit der Bohrlochwand herstellen. Somit ist ein Befestigungselement mit der erfindungsgemäßen Ankerhülse auch dann stabil und sicher verankerbar, wenn das Leitelement die erste Austrittsöffnung verschließt. Sofern das Leitelement nach dem Einführen in das Bohrloch planmäßig an der Innenseite der vorderen Wand eines Mauersteins anliegt und ein Austreten der Mörtelmasse zulässt, kann die an der zweiten Austrittsöffnung austretende Masse die Bildung eines Masseprofpens hinter der in Einsteckrichtung vorderen Wand des Mauersteins unterstützen. Das Leitelement kann daher relativ klein ausgeführt werden, was den Vorteil hat, dass die erfindungsgemäße Ankerhülse auch in einem Verankerungsgrund mit relativ kleinen Hohlräumen planmäßig funktioniert, da die Gefahr verringert ist, dass die planmäßige Anlage des Leitelements an der Innenseite der vorderen Wand durch einen Steg gestört wird.

Vorzugsweise ist der zweite Abschnitt mit der zweiten Austrittsöffnung in Einsteckrichtung vor dem ersten Abschnitt, insbesondere am Hülsenkörper, angeordnet. Hierdurch wird erreicht, dass der Austritt der aushärtbaren Masse auch dann nicht von dem Leitelement gestört wird, wenn es nicht planmäßig an der Innenseite der vorderen Wand des Mauersteins anliegt und gegebenenfalls die erste Austrittsöffnung verschließt. Die aus der zweiten Austrittsöffnung austretende Masse bildet in diesem Fall einen Massepfropfen, der die Ankerhülse im Mauerstein verankert. Zudem besteht die Möglichkeit, dass außer der vorderen Wand auch mindestens ein Steg eines Mauersteins zur Lastaufnahme aktiviert wird. Durch die Anordnung der zweiten Austrittsöffnung vor der ersten Austrittsöffnung ist es möglich, dass sich die zweite Austrittsöffnung in Einsteckrichtung hinter einem Steg befindet und die aushärtbare Masse hinter dem Steg einen zweiten Mörtelpfropfen bildet. Vorzugsweise ist der zweite Abschnitt als Siebhülse ausgebildet. Der zweite Abschnitt weist als Siebhülse mehrere Austrittsöffnungen auf, die im Umfang und über die Länge des zweiten Abschnitts verteilt angeordnet sind. Dadurch ist die Wahrscheinlichkeit vergrößert, dass sich zumindest eine Austrittsöffnung außerhalb eines Bohrlochs und hinter einem Steg befindet, der durch die Ausbildung eines Massepfropfens hinter dem Steg zur Lastaufnahme aktiviert werden kann. Die erfindungsgemäße Ankerhülse kann somit praktisch in allen Verankerungsgründen mit Hohlräumen eingesetzt werden, unabhängig von der Lage des Stegs beziehungsweise der Stege und des Bohrlochs.

Bei einer weiteren bevorzugten Ausführungsform der erfindungsgemäßen Ankerhülse ist das Leitelement elastisch beweglich. Das heißt, das Leitelement federt in einem Hohlraum des Mauersteins, der so groß ist, dass er das Leitelement vollständig aufnehmen kann, in die Position zurück, in der es vor dem Einführen der Ankerhülse in das Bohrloch im Mauerstein war. Insbesondere steht das Leitelement in radialer Richtung und gegen die Einsteckrichtung geneigt vom Schaft der Ankerhülse ab, was das Verspannen des Leitelements gegen die vordere Wand des Mauersteins und die Bildung eines Massepropfens erleichtert.

Um dem Massepropfen eine möglichst optimale Form im Hinblick auf die erzielbaren Haltekräfte und die verwendete Materialmenge zu geben, sieht eine weitere Ausgestaltungsform der erfindungsgemäßen Ankerhülse vor, dass das Leitelement schaufelförmig ausgebildet ist. "Schaufelförmig" bedeutet in diesem Zusammenhang, dass das Leitelement zur ersten Austrittsöffnung hin konkav gewölbt ist. Sind mehrere schaufelförmige Leitelemente am ersten Abschnitt angeordnet, so könen sie derart gestaltet sein, dass sie eine Schalung für einen im Wesentlichen kegelförmigen Massepfropfen bilden.

Vorzugsweise sind am ersten Abschnitt mindestens zwei benachbarte Leitelemente angeordnet, die in Umfangsrichtung voneinander beabstandet sind. Die Leitelemente bilden somit keinen im Wesentlichen geschlossenen Trichter. Die aushärtbare Masse kann zwischen den Leitelementen hindurch dringen und somit einen Pfropfen bilden, der größer ist als ein Pfropfen, der sich nur innerhalb eines durch die Leitelemente gebildeten Trichters bilden könnte. Von Vorteil ist zudem, dass diese Ausgestaltungsform mit den benachbarten und voneinander beabstandeten Leitelementen relativ einfach als Spritzgussteil herstellbar ist.

Bevorzugt ist zudem, dass die Ankerhülse ein Federelement aufweist, mit dem der Bund und der Hülsenkörper miteinander verbunden sind. Insbesondere ist das Federelement mit dem Hülsenkörper einstückig verbunden. Hierdurch wird eine elastisch bewegliche Verbindung zwischen dem Bund und dem Hülsenkörper geschaffen, die auf einfache Weise ein Einbringen des Leitelements in einen Hohlraum des Verankerungsgrunds und ein Verspannen gegen die vordere Wand des Verankerungsgrunds ermöglicht.

In einer bevorzugten Ausgestaltungsform ist die erfindungsgemäße Ankerhülse einstückig aus Kunststoff hergestellt. Die erfindungsgemäße Ankerhülse kann somit ohne Nachbearbeitung in einer Befestigungsanordnung mit einem Befestigungselement und einer Mörtelmasse eingesetzt werden. Die erfindungsgemäße Ankerhülse ist somit kostengünstig herstellbar.

Die Erfindung wird nachfolgend anhand eines Ausführungsbeispiels näher erläutert.

### Es zeigen:

- Figur 1: eine erste erfindungsgemäße Ankerhülse in einer perspektivischen Ansicht; und
- Figur 2: die erfindungsgemäße Ankerhülse in einem eingebauten Zustand in einer Seitenansicht.

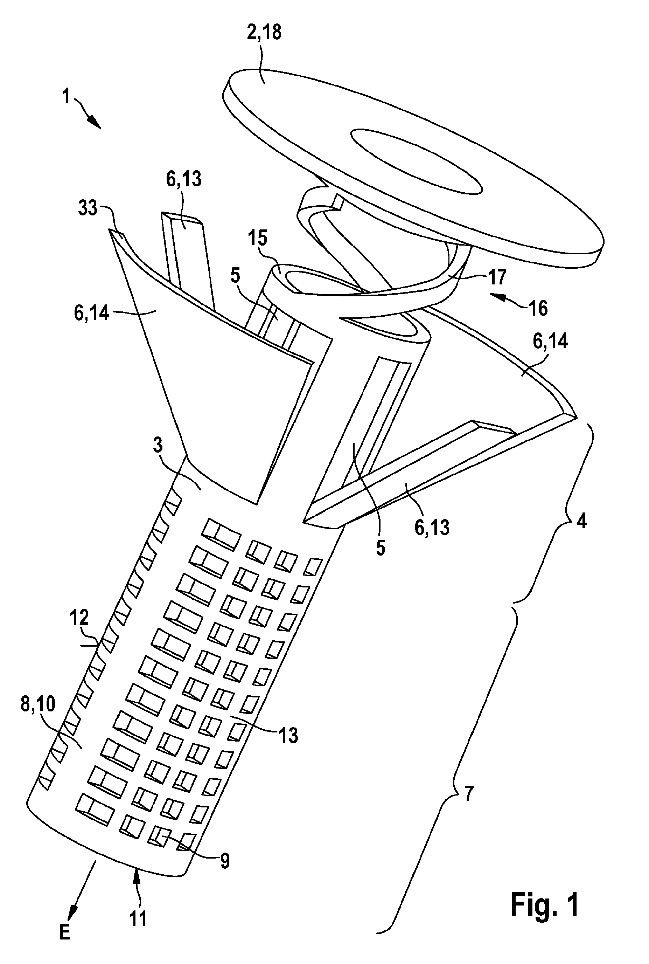

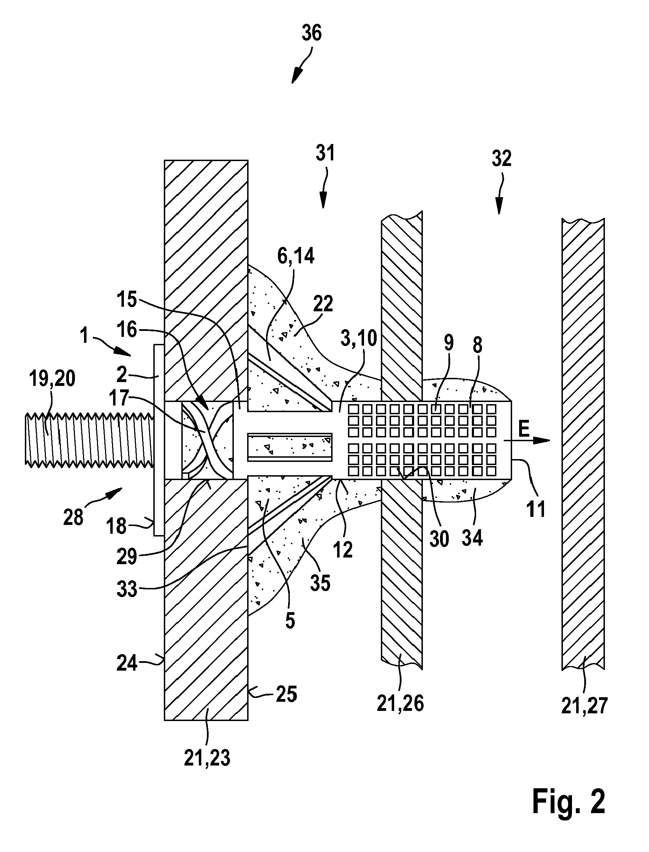

Die in Figur 1 dargestellte Ankerhülse 1 weist einen Bund 2 und einen Hülsenkörper 3 auf, die miteinander verbunden sind, sowie einen ersten Abschnitt 4, mit vier ersten Austrittsöffnungen 5, durch die die in das Innere der Ankerhülse 1 eingebrachte aushärtbare Masse 22 austreten kann, wie dies in Figur 2 dargestellt ist. Der Hülsenkörper 3 dient zur Aufnahme der aushärtbaren Masse 22 sowie des Befestigungselements 19. An jeder der ersten Austrittsöffnungen 5 ist ein Leitelement 6 angeordnet, das radial von der Ankerhülse 1 absteht. Die Ankerhülse 1 weist zudem einen zweiten Abschnitt 7 in Form einer Siebhülse 8 mit einer zweiten und weiteren Austrittsöffnungen 9 auf, wobei an keiner der Austrittsöffnungen 9 des zweiten Abschnitts 7 ein weiteres Leitelement angeordnet ist. Beide Abschnitte 4, 7 bilden gemeinsam den Hülsenkörper 3. Die Siebhülse 8 ist bezogen auf die Einsteckrichtung E, in der die Ankerhülse 1 in ein nicht dargestelltes Bohrloch eingesteckt wird, vor dem ersten Abschnitt 4 am Hülsenkörper 3 angeordnet.

Der Hülsenkörper 3 ist als hohlzylindrischer Körper 10 ausgeführt, der an seinem in Einsteckrichtung E vorderen Ende 11 durch eine ebene Grundfläche mit kreisförmigen Querschnitt verschlossen ist. Die Austrittsöffnungen 9 der Siebhülse 8 durchdringen die Mantelfläche 12 des hohlzylindrischen Körpers 10. Die Austrittsöffnungen 9 sind derart angeordnet, dass von der Mantelfläche 12 des hohlzylindrischen Körpers 10 im zweiten Abschnitt 7, also der Siebhülse 8, nur sich schneidende Verbindungsstege 13 verbleiben, die in Richtung der Einsteckrichtung E beziehungsweise senkrecht dazu in Umfangsrichtung verlaufen.

An den zweiten Abschnitt 7 schließt sich entgegen der Einsteckrichtung der erste Abschnitt 4 an. Im ersten Abschnitt 4 sind die vier ersten Austrittsöffnungen 5 angeordnet. Die ersten Austrittsöffnungen 5 sind als rechteckige Öffnungen ausgeführt, die die Mantelfläche des zylindrischen Grundkörpers 10 durchdringen. Die vier ersten Austrittsöffnungen 5 sind in Richtung der Einsteckrichtung E gestreckt und gleichmäßig über den Umfang des zylindrischen Grundkörpers 10 verteilt. Am in Einsteckrichtung E vorderen Ende der ersten Austrittsöffnungen 5 sind die Leitelemente 6 mit dem Hülsenkörper 3 elastisch beweglich verbunden. Das heißt, werden die Leitelemente 6 gegenüber der dargestellten Ausgangsstellung durch eine äußere Kraft ausgelenkt, so federn sie, wenn die äußere Kraft nicht mehr einwirkt, in die Ausgangsstellung zurück.

Die vier Leitelemente 6 sind paarweise sich gegenüberliegend als ebene, flache, quaderförmige Leitelemente 13 und als schaufelförmig gekrümmte, flache Leitelemente 14, in der Form einer Mantelfläche eines Kegelstumpfes, ausgeführt, wobei jeweils zwei benachbarte Leitelemente 13, 14 in Umfangsrichtung voneinander beabstandet sind.

Am hinteren Ende 15 des Hülsenkörper 3 schließt sich das Federelement 16 an, mit dem der Bund 2 und der Hülsenkörper 3 miteinander einstückig, und in Einsteckrichtung E zueinander elastisch beweglich, verbunden sind. Das Federelement 16 besteht aus zwei spiralförmig gewundenen Federlaschen 17, so dass das Federelement 16 eine Art Spiralfeder darstellt. Die Federlaschen 17 sind mit dem Bund 2 fest verbunden. Der Bund 2 ist als hülsenartige Scheibe ausgestaltet, mit einem gegenüber dem Hülsenkörper 3 vergrößertem Außendurchmesser. Der Bund 2 bildet das hintere Ende 18 der Ankerhülse 1. Die Ankerhülse 1 ist einstückig als Spritzgussteil aus Kunststoff hergestellt, wodurch sie preisgünstig und einfach zu produzieren ist.

Figur 2 zeigt die erfindungsgemäße Ankerhülse 1 zur Befestigung des Befestigungselements 19 in Form einer Gewindestange 20 in einem Verankerungsgrund 21 mittels der aushärtbaren Masse 22, beispielsweise eines Vinylesterharz-Mörtels. Der Verankerungsgrund 21 ist ein Hochlochziegel mit einer in Richtung der Einsteckrichtung E der Ankerhülse 1 vorderen Wand 23, mit einer Außenseite 24 und einer Innenseite 25, einem ersten Steg 26 und einem zweiten Steg 27, die zur vorderen Wand 23 parallel und von dieser beabstandet sind, wobei der erste Steg 26 mittig zwischen der vorderen Wand 23 und dem zweiten Steg 27 angeordnet ist. Zwischen der vorderen Wand 23 und dem ersten Steg 26 befindet sich ein erster Hohlraum 31, zwischen dem ersten Steg 26 und dem zweiten Steg 27 befindet sich ein zweiter Hohlraum 32. In den Verankerungsgrund 21 ist ein Bohrloch 28 eingebracht, mit einem ersten Teil 29 in der vorderen Wand 23 und einem zweiten Teil 30 im ersten Steg 26.

Wird nun die Ankerhülse 1 mit dem vorderen Ende 11 der Siebhülse 8 in das Bohrloch 28 eingesteckt, so tritt der Hülsenkörper 3 zunächst in den ersten Teil 29 des Bohrlochs 28 ein, dann in den ersten Hohlraum 31, dann in den zweiten Teil 30 des Bohrlochs 28 und in den zweiten Hohlraum 32. Zum Einstecken in das Bohrloch 28 ist die Siebhülse 8 beispielsweise auf einen nicht dargestellten Statikmischer einer ebenfalls nicht dargestellten Injektionskartusche für die aushärtbare Masse 22 aufgesteckt. Mit Hilfe des Statikmischers wird der Hülsenkörper 3 so weit in den zweiten Hohlraum 32 eingesteckt, bis die Leitelemente 6 vollständig in den ersten Hohlraum 31 eingeführt sind. Beim Eintreten der Leitelemente 6 in den ersten Teil 29 des Bohrlochs 28 legen sich die Leitelemente 6 an den Hülsenkörper 3 an. Beim vollständigen Einführen der Leitelemente 6 in den ersten Hohlraum 31 liegt der Bund 2 an der Außenseite 24 der vorderen Wand 23 an, so dass die Federlaschen 17 des Federelements 16 elastisch gespannt werden. Sobald die Leitelemente 6 vollständig durch den ersten Teil 29 des Bohrlochs 28 durchgeführt sind, federn sie elastisch in ihre Ausgangsstellung zurück. Wird nun der Statikmischer ein wenig aus der Siebhülse 8 zurückgezogen, so werden die vom Hülsenkörper 3 abstehenden hinteren Enden 33 der Leitelemente 6 durch das vorgespannte Federelement 16 gegen die Innenseite 25 vorderen Wand 23 gedrückt. Hierdurch liegt die Ankerhülse 1 stabil am Verankerungsgrund 21 an, so dass die aushärtbare Masse 22 und die Gewindestange 20 problemlos in die Ankerhülse 1 eingeführt werden können.

Nun wird über den Statikmischer die aushärtbare Masse 22 in die Ankerhülse 1 gefüllt und die Gewindestange 20 in die Ankerhülse 1 eingesteckt. Die aushärtbare Masse 22 tritt an der Siebhülse 8 aus den Austrittsöffnungen 9 vor und hinter dem ersten Steg 26 aus, so das sich ein zweiter Massepfropfen 34 im zweiten Hohlraum 32 bildet, der am zweiten Steg 26 anliegt. Durch den zweiten Massepfropfen 34 werden Kräfte, die entgegen der Einsteckrichtung E auf die Gewindestange 20 wirken, von der durch die Masse 22 zumindest teilweise umschlossenen Gewindestange 20 über die Masse 22 in den ersten Steg 26 übertragen. Im Bereich des ersten Hohlraums 31 bildet sich durch die aus den ersten Austrittsöffnungen 5 und den im Bereich des ersten Hohlraums 31 liegenden Austrittsöffnungen 9 der Siebhülse 8 ein erster Massepfropfen 35. Der erste Massepfropfen 35 ist auf Grund der Leitelemente 6, insbesondere auf Grund der schaufelförmig ausgebildeten Leitelemente 14, kegelförmig ausgebildet. Der Massepfropfen 35 liegt an der Innenseite 25 der vorderen Wand 23 des Verankerungsgrunds 21 an, so dass auch hier Kräfte von der Gewindestange 20 über die Masse 22 in den Verankerungsgrund 21 eingeleitet werden können. Durch die im Verhältnis zu den Austrittsöffnungen 9 der Siebhülse 8 relativ großen ersten Austrittsöffnungen 5 tritt relativ viel aushärtbare Masse 22 aus, so dass der erste Massepfropfen 35 deutlich größer als der zweite Massepfropfen 34 ist. Dies führt zu einer optimalen Ausnutzung der aushärtbaren Masse 22, da an der relativ starken vorderen Wand 23 des Verankerungsgrunds 21 ein großer erster Massepfropfen 35 anliegt, durch den relativ große Kräfte in die vorderen Wand 23 eingeleitet werden können, wohingegen der kleinere Massepfropfen 34 nur geringere Kräfte in den dünnen und somit schwachen ersten Steg 26 einleitet.

Durch die Aktivierung des ersten Stegs 26, und bei entsprechender Ausführung des zweiten Steges 27 des Verankerungsgrunds 21, ist die Leistungsfähigkeit der aus der Ankerhülse 1, dem Befestigungselement 19 und der aushärtbaren Masse 22 bestehenden Befestigungsanordnung 36 gegenüber den aus dem Stand der Technik bekannten Befestigungsanordnungen deutlich verbessert. Ein weiterer Vorteil ist, dass auch Kräfte, die auf die Gewindestange 20 in Richtung der Einsteckrichtung E wirken, von der aus der Siebhülse 8 im ersten Hohlraum 31 ausgetretenen Masse 22 in den ersten 21 Steg übertragen werden können. Das bedeutet, dass sowohl zur Ableitung von Zug- als auch von Druckkräften, die auf das Befestigungselement 19 wirken, sowohl die vordere Wand 23 wie auch die Stege 26, 27 mit Hilfe der erfindungsgemäßen Siebhülse 21 aktiviert werden können. Die Ankerhülse 1 findet darüber hinaus selbst in einem Vollbaustoff oder in einem Mauerstein im Bereich senkrecht zur vorderen Wand 23 verlaufenden Stegen sehr guten Halt.

## Patentansprüche

1. Ankerhülse (1) zum Verankern eines Befestigungselements (19) in einem Verankerungsgrund (21) mittels einer aushärtbaren Masse (22),
- wobei die Ankerhülse (1) einen Bund (2) und einen Hülsenkörper (3) aufweist,
- wobei die Ankerhülse (1) zur Aufnahme des Befestigungselements (19) dient,
- wobei der Bund (2) und der Hülsenkörper (3) miteinander verbunden sind,
- wobei die Ankerhülse (1) einen ersten Abschnitt (4) mit mindestens einer ersten Austrittsöffnung (5) für die aushärtbare Masse (22) aufweist, und
- wobei an der ersten Austrittsöffnung (5) ein Leitelement (6) für die aushärtbare Masse (22) angeordnet ist, das radial von der Ankerhülse (1) absteht,
**dadurch gekennzeichnet,**
**dass** die Ankerhülse (1) einen zweiten Abschnitt (7) mit mindestens einer zweiten Austrittsöffnung (9) aufweist, an der kein Leitelement angeordnet ist.

2. Ankerhülse nach Anspruch 1, **dadurch gekennzeichnet, dass** die zweite Austrittsöffnung (9) in Einsteckrichtung (E) vor dem ersten Abschnitt (4), insbesondere am Hülsenkörper (3), angeordnet ist.

3. Ankerhülse nach Anspruch 1 oder 2, **dadurch gekennzeichnet, dass** der zweite Abschnitt (4) als Siebhülse (8) ausgebildet ist.

4. Ankerhülse nach einem der Ansprüche 1 bis 3, **dadurch gekennzeichnet, dass** das Leitelement (6) elastisch beweglich ist.

5. Ankerhülse nach einem der Ansprüche 1 bis 4, **dadurch gekennzeichnet, dass** das Leitelement (6) schaufelförmig ausgebildet ist.

6. Ankerhülse nach einem der Ansprüche 1 bis 5, **dadurch gekennzeichnet, dass** am ersten Abschnitt (4) mindestens zwei benachbarte Leitelemente (13, 14) angeordnet sind, die in Umfangsrichtung voneinander beabstandet sind.

7. Ankerhülse nach einem der Ansprüche 1 bis 6, **dadurch gekennzeichnet, dass** die Ankerhülse (1) ein Federelement (16) aufweist, mit dem der Bund (2) und der Hülsenkörper (3) miteinander verbunden sind, wobei das Federelement (16) und der Hülsenkörper (3) einstückig miteinander verbunden sind.

8. Ankerhülse nach einem der Ansprüche 1 bis 7, **dadurch gekennzeichnet, dass** die Ankerhülse (1) einstückig aus Kunststoff hergestellt ist.
